# EUROPÄISCHE PATENTSCHRIFT

(11) **EP 2 418 556 B1**
(45) Veröffentlichungstag und Bekanntmachung des Hinweises auf die Patenterteilung: **12.02.2014**
(21) Anmeldenummer: 10172682.6
(22) Anmeldetag: 12.08.2010
(51) Int. Cl.: G05B 19/418, H04L 29/06

(54) **Internetbasiertes Füllstandmesswert- und Diagnoseinformationsabfragesystem und entsprechendes Verfahren**
Internet-based fill level measuring and diagnosis information query system and corresponding method
Système de détection d'informations de diagnostic et de valeur de mesure du niveau de remplissage basé sur Internet et procédé correspondant

(43) Veröffentlichungstag der Anmeldung: 15.02.2012
(73) Patentinhaber: VEGA Grieshaber KG, 77709 Wolfach (DE)
(72) Erfinder: Faist, Fridolin, 77709, Oberwolfach (DE); Wettlin, Martin, 77761, Schiltach (DE)
(74) Vertreter: Maiwald Patentanwalts GmbH

(56) Entgegenhaltungen:
- DE-A1-102007 002 351
- Grafinkel S et al: "Web Security, Privacy & Commerce", 1. Januar 2002 (2002-01-01), O'Reilly, US, XP002623651, ISBN: 0-596-00045-6 Seiten 533-549, * Seite 545, Zeile 1 - Zeile 13 *
- ROBERT ITSCHNER ET AL: "GLASS: Remote Monitoring of Embedded Systems in Power Engineering", 1. Juni 1998 (1998-06-01), IEEE INTERNET COMPUTING, IEEE SERVICE CENTER, NEW YORK, NY, US, PAGE(S) 46 - 52, XP002114070, ISSN: 1089-7801 * das ganze Dokument *

## Beschreibung

Die Erfindung betrifft Füllstandmesswert- und Diagnoseinformationsabfragesysteme. Insbesondere betrifft die Erfindung ein internetbasiertes Füllstandmesswert- und Diagnoseinfornationsabfragesystem, sowie ein Verfahren zum Verwenden eines derartigen internetbasierten Füllstandmesswert- und Diagnoseinformationsabfragesystems.

### Technologischer Hintergrund

Füllstände von Behältern und Silos können unter Nutzung von Füllstandsensoren automatisch bestimmt und die Messwerte können über Feldbusverbindungen an übergeordnete Leitsysteme oder Server übermittelt werden. Anschließend können diese Messwerte innerhalb lokaler Netzwerke oder über entsprechende Internetverbindungen an einen Clientrechner übermittelt und dort visualisiert werden.

Beim bisherigen Stand der Technik ist entweder gar kein Mechanismus zur Zugriffssteuerung vorhanden oder die Zugriffssteuerung erfolgt serverseitig über das Anlegen eines individuellen Benutzerkontos für jedes Daten-Set, das von den Clientrechnern abrufbar sein soll. Im Clientrechner muss dann bei jedem Zugriff ein Login auf das Benutzerkonto getätigt werden. Die Benutzerkonten betreffen allerdings üblicherweise ganz andere Aspekte, nämlich die Rechte zur Verwaltung ganzer Projekte, das Einrichten von Messwert-Ansichten, das Einrichten von Benachrichtigungen, das Zuweisen von Geräten zu Projekten, usw.

Somit besteht das Risiko, dass die Betreiber eines Clientrechners weit mehr Berechtigungen erhalten, als für den Anwendungsfall des reinen Datenkonsumierens notwendig und sinnvoll ist. Gleichzeitig kann serverseitig die Liste der definierten Benutzerkonten unnötig lang und unübersichtlich werden.

Eine Vermischung thematisch völlig unterschiedlicher Aufgaben innerhalb der Liste der Benutzerkonten wäre die Folge. Die Gefahr wäre groß, dass beispielsweise Benutzerkonten, die ursprünglich nur für Nutzer mit ausschließlicher Datenkonsumierung gedacht waren, zu einem späteren Zeitpunkt durch Ändern der Einstellungen des Benutzerkontos unbeabsichtigte Freigaben zum Verändern von Projekten erhalten würden. Ein weiteres Problem besteht auch darin, dass die Zugriffsberechtigungen in den Benutzerkonten versteckt sind und dass es somit sogar für den Administrator des Systems aufwändig ist, sicherzustellen und nachzuvollziehen, welche Adressaten bereits automatisierten Zugriff auf Messwert-Informationen über Clientrechner nutzen. Ein weiteres Problem besteht auch darin, dass im Gegensatz zu den Inhabern von Benutzerkonten, die üblicherweise einen recht umfangreichen Einblick auf die Projektdaten haben, die konsumierenden Clientrechner häufig nur die Daten von einzelnen Messstellen erhalten sollen.

Es ist also häufig eine granularere Struktur der Zugriffssteuerung auf Messstellenebene erforderlich, was wiederum zu einer Explosion der Liste an Benutzerkonten führt. Unter "granular" ist hierbei zu verstehen, dass bei Vorliegen einer komplexen Projektstruktur (Projekt mit sehr vielen einzelnen Messtellen, die wiederum innerhalb des Projekts mehrfach gruppiert und untergliedert sind) Zugriffsberechtigungen auf sehr "kleine Einheiten" (also zum Beispiel nur 1 oder 2 Messstellen) ermöglicht werden.

An dieser Stelle sei auch nochmal darauf hingewiesen, dass eine 1:1 - Verknüpfung von Zertifikat mit genau einer Messstelle nicht notwendig ist. Das kann zwar so sein, es ist aber ebenso vorgesehen, dass ein Zertifikat einem Datenobjekt bestehend aus mehreren Messstellen zugeordnet wird.

Ferner erweist es sich im Umfeld von Internetanwendungen als problematisch und aufwändig, wenn proprietäre Übertragungsprotokolle zum Einsatz kommen.

DE 10 2007 002 351 A1 beschreibt eine automatische Überwachung und Steuerung von Füllständen. Das beschriebene System ermöglicht eine bidirektionale Kommunikation zwischen einzelnen Feldgeräten und einem Zentralsystem.

Grafinkel S. et al.: "Web Security, Privacy & Commerce", 1. Januar 2002, O'Reilly, US, ISBN: 0-596-00045-6, Seiten 533 bis 549 beschreibt die Verwendung von Zertifikaten, um hiermit einen Zugriff auf einen Server zu ermöglichen.

### Zusammenfassung der Erfindung

Es ist eine Aufgabe der Erfindung, einen einfachen und sicheren Zugriff auf Messdaten und Diagnosedaten von Füllstandmessgeräten bereitzustellen.

Es sind ein internetbasiertes Füllstandmesswert- und Diagnoseinformationsabfragesystem und ein Verfahren zum Verwenden eines derartigen internetbasierten Füllstandmess- und Diagnoseinformationsabfragesystems gemäß den Merkmalen der unabhängigen Patentansprüche angegeben. Weiterbildungen der Erfindung ergeben sich aus den Unteransprüchen.

Gemäß einem ersten Aspekt der Erfindung ist ein internetbasiertes Füllstandmesswert- und Diagnoseinformationsabfragesystem angegeben, welches einen Server, zumindest ein erstes Feldgerät und zumindest eine Recheneinheit aufweist. Das erste Feldgerät ist zur Übermittlung von ersten Messwerten an den Server kommunikativ mit dem Server verbunden. Die Recheneinheit ist zur Abfrage der ersten Messwerte von dem Server über das Internet kommunikativ mit dem Server verbunden. Das System ist zur Erzeugung eines ersten Zertifikats (z. B. ein X.509 Zertifikat) und eines dem ersten Zertifikat zugeordneten, ersten Datenobjekts auf eine Anfrage der Recheneinheit ausgeführt. Dieses erste Datenobjekt ermöglicht es dem Server, die ersten Messwerte des ersten Feldgeräts als dem ersten Zertifikat zugeordnet zu identifizieren und der Server ist zur automatischen Übermittlung der dem ersten Zertifikat zugeordneten Daten (also insbesondere der Messwerte) an die Recheneinheit ausgeführt, wenn er eine entsprechende Anfrage zusammen mit dem ersten Zertifikat von der Recheneinheit erhält.

In anderen Worten kann die Recheneinheit (und damit ein Benutzer) im Server definieren, welche Daten der Server der Recheneinheit auf eine entsprechende Anfrage automatisch zur Verfügung stellen soll. Bei diesen Daten kann es sich um Messwerte und/oder Diagnoseinformationsdaten handeln, die dem Server von dem entsprechenden Feldgerät bereitgestellt werden. Eine Aufbereitung der Daten in Form von Grafiken auf dem Server ist nicht notwendig.

Dieses System kann auch zur Abfrage von Druck- oder Durchflussmessdaten von Feldgeräten von einem Server verwendet werden.

Das Datenobjekt definiert die der Recheneinheit maximal zur Verfügung zu stellenden Daten. Bei diesen Daten kann es sich beispielsweise um sämtliche Mess-und Diagnoseinformationsdaten handeln, die dem Server von einer gewissen Auswahl an Feldgeräten, die mit dem Server verbunden sind, zur Verfügung gestellt wurden. Auch kann das Datenobjekt definieren, dass diese Daten zeitlich eingeschränkt sind, dass es sich beispielsweise maximal um die Daten der letzten Tage, der letzten Wochen oder der letzten Monate handeln darf. Das Datenobjekt wird vom Server zusammen mit dem Zertifikat erzeugt und beschreibt alle Daten, die der Benutzer (zukünftig) gerne vom Server erhalten möchte.

Gemäß einem Ausführungsbeispiel der Erfindung weist das System ein zweites Feldgerät auf, das zur Übermittlung von zweiten Messwerten an den Server kommunikativ mit dem Server verbunden ist, wobei das System zur Erzeugung eines zweiten Zertifikats und eines, dem zweiten Zertifikat zugeordneten, zweiten Datenobjekts auf Anfrage der Recheneinheit ausgeführt ist. Das zweite Datenobjekt ermöglicht es dem Server, die zweiten Messwerte des Feldgeräts als dem zweiten Zertifikat zugeordnet zu identifizieren. Der Server ist zur automatischen Übermittlung der dem zweiten Zertifikat zugeordneten Daten oder, falls gewünscht, zur automatischen Übermittlung der zweiten Messwerte an die Recheneinheit ausgeführt, wenn er eine entsprechende Anfrage zusammen mit dem zweiten Zertifikat von der Recheneinheit erhalten hat.

Die Recheneinheit kann also Messwerte und Diagnoseinformationsabfragedaten von verschiedenen Feldgeräten anfordern, insofern das entsprechend mitgesendete Zertifikat dies zulässt.

Gemäß einem weiteren Ausführungsbeispiel der Erfindung ist der Server zur Erzeugung des ersten Zertifikats und des ersten Datenobjekts (und des zweiten

Zertifikats und des zweiten Datenobjekts, etc.) auf Anfrage der Recheneinheit ausgeführt.

Der Benutzer kann also bestimmen, auf welche Daten er in Zukunft Zugriff haben möchte und kann sich ein entsprechendes Zertifikat vom Server besorgen, falls der Benutzer entsprechende Benutzerrechte auf dem Server hat.

Gemäß einem weiteren Ausführungsbeispiel der Erfindung ist der Server zur Verwaltung des ersten Zertifikats ausgeführt.

Gemäß einem weiteren Ausführungsbeispiel der Erfindung ist der Server weiterhin zur Verwaltung individueller Benutzerkonten ausgeführt, über welche die Recheneinheit eine Parametrierung des ersten Feldgeräts vornehmen kann.

Gemäß einem weiteren Ausführungsbeispiel der Erfindung ist der Server für die Verwaltung der individuellen Benutzerkonten zur Bereitstellung einer ersten Benutzeroberfläche für einen Benutzer der Recheneinheit ausgeführt. Weiterhin ist der Server für die Verwaltung der Zertifikate zur Bereitstellung einer zweiten Benutzeroberfläche für einen Benutzer der Recheneinheit ausgeführt. Hierbei kann es sich um denselben Benutzer oder um einen anderen Benutzer handeln.

Gemäß der Erfindung bestimmt alleine das von der Recheneinheit im Server eingegangene Zertifikat und somit das dem ersten Zertifikat zugeordnete erste Datenobjekt den Umfang der daraufhin von dem Server an die Recheneinheit zu übermittelnden Daten.

Es reicht also, wenn der Benutzer dem Server sein Zertifikat übermittelt. Er bekommt dann automatisch die dem Zertifkat zugeordneten Mess-und/oder die Diagnoseinformationsdaten zurückgesendet.

Gemäß einem weiteren Ausführungsbeispiel der Erfindung ermöglicht das erste Datenobjekt es dem Server weiterhin, Diagnosedaten des ersten Feldgeräts als dem ersten Zertifikat zugeordnet zu identifizieren.

Gemäß einem weiteren Ausführungsbeispiel der Erfindung handelt es sich bei dem ersten Feldgerät um ein Füllstandmessgerät, in welchem Fall die entsprechenden Daten Füllstandmessdaten und Diagnosedaten des Füllstandmessgeräts sind.

Auch kann es sich bei dem Feldgerät um ein Durchflussmessgerät oder ein Druckmessgerät handeln.

Gemäß einem zweiten Aspekt der Erfindung ist ein Verfahren zum Verwenden eines oben und im Folgenden beschriebenen internetbasierten Füllstandmesswert- und Diagnoseinformationsabfragesystems angegeben. Es werden erste Messwerte von einem ersten Feldgerät an einen Server übermittelt. Daraufhin wird auf eine Anfrage der Recheneinheit ein erstes Zertifikat und ein, dem ersten Zertifikat zugeordnetes, erstes Datenobjekt serverseitig erzeugt. Mit Hilfe des ersten Datenobjekts erfolgt eine Identifikation der ersten Messwerte des ersten Feldgeräts als dem ersten Zertifikat zugeordnet. Nach Identifikation der ersten Messwerte erfolgt ein automatisches Übermitteln dieser Messwerte von dem Server an die Recheneinheit, nachdem der Server eine entsprechende Anfrage zusammen mit dem ersten Zertifikat von der Recheneinheit erhalten hat.

Gemäß einem weiteren Ausführungsbeispiel der Erfindung weist das Verfahren weiterhin die folgenden Schritte auf: Übermitteln des Zertifikats von der Recheneinheit an den Server; Authentifizieren der Recheneinheit auf Basis des Zertifikats; und Bestimmen eines Umfangs der daraufhin von dem Server an die Recheneinheit zu übermittelnden Daten alleine mit Hilfe des dem Server übermittelten ersten Zertifikats und somit des dem ersten Zertifikat zugeordneten ersten Datenobjekts.

Gemäß einem weiteren Ausführungsbeispiel der Erfindung weist das Verfahren eine Bereitstellung einer ersten Benutzeroberfläche für einen Benutzer der Recheneinheit durch den Server zur Verwaltung der individuellen Benutzerkonten und eine Bereitstellung einer zweiten Benutzeroberfläche für einen Benutzer der Recheneinheit durch den Server zur Verwaltung der Zertifikate auf.

Im Folgenden werden mit Verweis auf die Figuren Ausführungsbeispiele der Erfindung beschrieben.

### Kurze Beschreibung der Figuren

Fig. 1 zeigt ein internetbasiertes Füllstandmesswert- und Diagnoseinformationsabfragesystem gemäß einem Ausführungsbeispiel der Erfindung.
Fig. 2 zeigt ein Verfahren gemäß einem Ausführungsbeispiel der Erfindung.
Fig. 3 zeigt eine Benutzeroberfläche zum Verwalten mehrerer Kunden (Anlagenbetreiber) auf dem Server.
Fig. 4 zeigt eine Benutzeroberfläche zur Verwaltung von verschiedenen Projekten, die sich ein Kunde zur besseren Übersichtlichkeit definiert hat.
Fig. 5 zeigt eine Benutzeroberfläche für Benutzerkontenverwaltung.
Fig. 6 zeigt eine Benutzeroberfläche zur Verwaltung von Datenfreigaben für Clientrechner gemäß einem Ausführungsbeispiel der Erfindung.
Fig. 7 zeigt ein grafische Hilfsmittel zur Auswahl von gewünschten Messstellen zur Datenfreigabe gemäß einem Ausführungsbeispiel der Erfindung.
Fig. 8 zeigt die Übermittlung eines Zertifikats an einen Clientrechner gemäß einem Ausführungsbeispiel der Erfindung.
Fig. 9 zeigt eine Benutzeroberfläche sowie benutzerseitiges Herunterladen eines Zertifikats gemäß einem Ausführungsbeispiel der Erfindung.
Fig. 10 zeigt ein weiteres System gemäß einem Ausführungsbeispiel der Erfindung.

Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

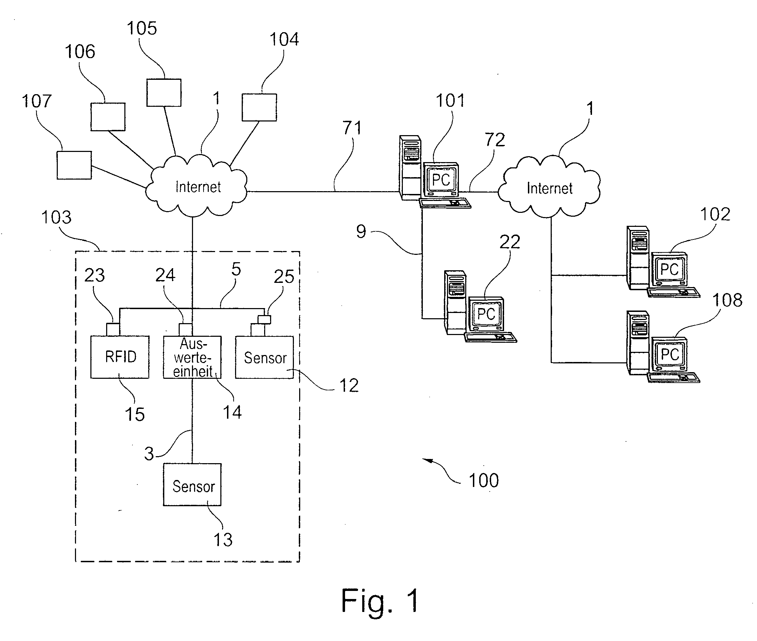

Fig. 1 zeigt ein internetbasiertes Füllstandmesswert- und Diagnoseinformationsabfragesystem gemäß einem Ausführungsbeispiel der Erfindung. Das System 100 weist mehrere Feldgeräte 103, 104, 105, 106, 107 (Füllstandmessgeräte, Druckmessgeräte und/oder Durchflussmessgeräte) auf, die über das Internet 1 und entsprechende Datenleitungen (Kommunikationspfade) 71 mit dem Server 101 verbunden sind. Weiterhin sind mehrere Recheneinheiten 102, 108 ebenfalls über das Internet 1 und entsprechende Datenleitungen 72 mit dem Server 101 verbunden.

Das Feldgerät 103 weist hierfür Sensoren 13 (Füllstandsensoren, Durchflussmesssensoren oder Drucksensoren) auf, die ihre Messwerte über eine Verbindung 3 wahlweise anhand einer digitalen Busverbindung oder als analoges 4...20 mA Füllstandsignal an eine übergeordnete Auswerteeinheit 14 weiterleiten. Weiterhin können zusätzliche Sensoren 12 vorgesehen sein, die nicht über die Auswerteeinheit 14 mit dem Internet 1 kommunizieren. Auch können Identifikationssensoren 15 zur Erfassung von Stückdaten vorgesehen sein (beispielsweise RFID-Sensoren).

Den Sensoren 12, 15 bzw. der Auswerteeinheit 14 sind entsprechende Kommunikationseinheiten 23, 24, 25 zugeordnet, welche entweder direkt in den Sensoren 12, 15 bzw. der Auswerteeinheit 14 integriert sind oder mit diesen Geräten über eine entsprechende Übertragungsstrecke (kabelgebunden oder kabellos) kommunizieren.

Über das Internet 1 und eine entsprechende Kommunikationsstrecke 71 werden die Messdaten des Feldgeräts 103 und weiterer Feldgeräten 103, 104, 105, 106, 107 an den zentralen Server 101 übertragen. Die Kommunikationsverbindung zwischen dem Server 101 und den Feldgeräten 103, 104, 105, 106, 107 erfolgt bidirektional. Es können also Messwerte gezielt abgefragt und die einzelnen Geräte gezielt parametriert werden.

Der Server 101 umfasst einen Web-VV Server, welcher über den Komnunikationspfad 71, 72 mit dem Internet 1 verbunden ist. Über das Internet kann ein Datenaustausch mit weltweit verteilten Webbrowsern, die auf Recheneinheiten 102, 108 installiert sind, zur Messwertdarstellung oder zum Messwertmanagement erfolgen.

Weiterhin kann ein Logistik-Tool 22 vorgesehen sein, beispielsweise in Form einer weiteren Recheneinheit mit entsprechender Logistik-Software, welche über die Datenübertragungsstrecke 9 (ebenfalls drahtgebunden oder drahtlos) mit dem Server 101 kommunizieren kann.

Das System gestattet einen gesicherten Zugriff auf Daten des Messwert-Servers 101 über das Internet im Bereich der Füllstandinessung, Druckmessung und Durchflussmessung.

Bei dem Server 101 handelt es sich beispielsweise um einen sog. WEB-VV-Server der Fa. VEGA. Das System arbeitet global und ist in der Lage, die Füllstände über das Internet von jedem Ort der Welt an den zentralen Server 101 zu übermitteln. Für die Visualisierung der Daten, die auf dem Server 101 liegen, kann ein Internetbrowser eingesetzt werden. Eine andere Möglichkeit besteht darin, eine Anwendung auf den Clientrechner 102, 108 zu installieren und diese Anwendung im Bedarfsfall auf dem entsprechenden Clientrechner zu starten. Als Übertragungsprotokoll können proprietäre Lösungen zum Einsatz kommen. Eine Zugriffssteuerung auf die Messwert-Informationen kann über Benutzerkonten erfolgen oder eben, wie oben beschrieben, durch Übermittlung einer entsprechenden Anfrage zusammen mit einem entsprechenden Zertifikat von dem Clientrechner 102, 108 an den Server 101.

### Auf dem Server 101 werden die Messwerte und die

Diagnoseinformationsabfragedaten einer Vielzahl von Kunden (und damit einer Vielzahl von Feldgeräten 103 bis 107) zentral in einer Datenbank verwaltet. Der Zugriff der Clientrechner 102, 108 auf die Messwerte des Servers erfolgt beispielsweise über Webservices. Hierbei wird ein besonderes Verfahren eingesetzt, um sicherzustellen, dass nur berechtigte Clientrechner auf den Server 101 zugreifen können und dabei auch nur die Messwerte, die für diese Clientrechner freigegeben wurden, abrufbar sind. Die Clients 102, 108 visualisieren die erhaltenen Messwerte und ggf. Diagnoseinformationsdaten selbst mit Hilfe einer entsprechenden Clientsoftware (z. B. eine Microsoft Windows-Anwendung oder eine Microsoft Windows 7-Minianwendung) oder nutzen die Daten zur Weiterverarbeitung in Logistikanwendungen. Das erfindungsgemäße System kann gemäß einem Austührungsbeispiel die Füllstandmesswert- und Diagnoseinformationsdaten ohne Zutun eines Benutzers automatisch abrufen und anzeigen oder einer Weiterverarbeitung übergeben.

Das System stellt eine klare Trennung der unterschiedlichen Themenbereiche "Benutzerkonten" und "Datenfreigabe für Clientrechner" bereit, wodurch die Übersichtlichkeit verbessert wird. Die Zugriffssteuerung wird durch die Vergabe von Zertifikaten abgesichert, die jeweils beim Erstellen der Datenobjekte generiert und diesen zugeordnet werden. Das Zertifikat wird einem Betreiber des Clientrechners übermittelt. Nur der Inhaber eines Zertifikats kann Zugriff auf die Daten auf dem Server erhalten, und zwar genau auf die Daten, die im zugeordneten Datenobjekt beschrieben sind. Die Definition erfolgt zentral an einer Stelle, nämlich auf dem Server, und wird auch hier verwaltet. Dieser Server benötigt für die Herausgabe der Daten nur eine einzige Schnittstelle, die anhand des Zertifikats des anfragenden Rechners die Datenzugriffe kanalisiert. Somit wird der Test- und Implementierungsaufwand auf dem Server niedrig gehalten und dennoch eine maximale Flexibilität sichergestellt. Ein weiterer Vorteil besteht darin, dass das Nutzen von Zertifikaten einen maximalen Schutz vor Datenmissbrauch bietet.

Bei dem internetbasierten Zugriff auf den Server kann zur Datenübertragung das bekannte HTTP-Protokoll verwendet werden. Dadurch wird vermieden, dass auf der Clientseite Konfigurationsaufwand für den Netzwerk-Administrator erforderlich wird, da jeder Rechner, der auf der Clientseite Internetzugang für die Browsernutzung (z. B. Internet Explorer) hat, automatisch auch den Webservice nutzen kann.

Die einzelnen Schritte hin zur Nutzung von Webservices innerhalb dieses Systems sehen dann wie folgt aus:

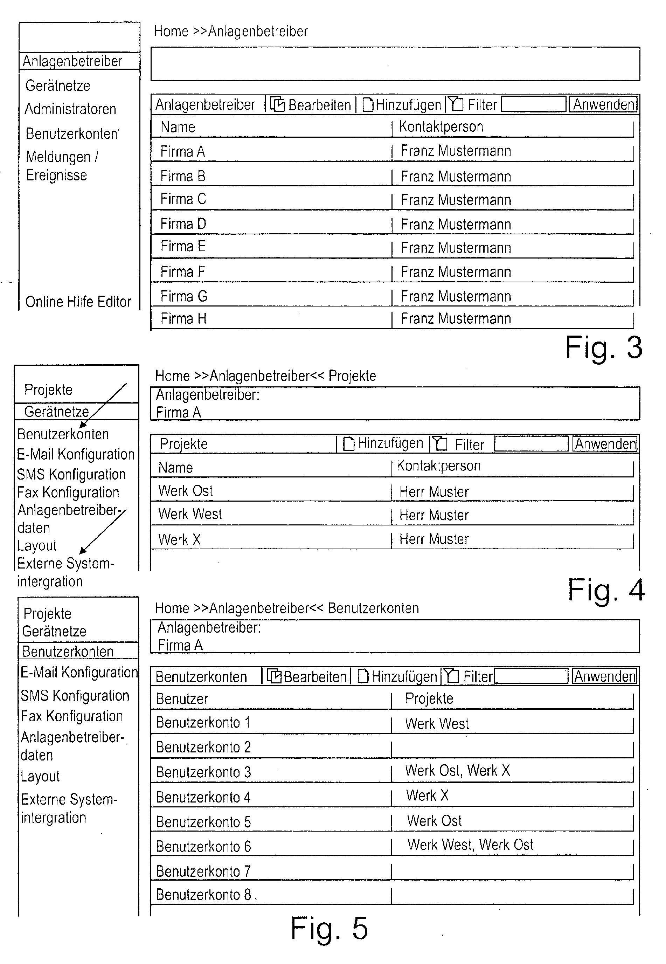

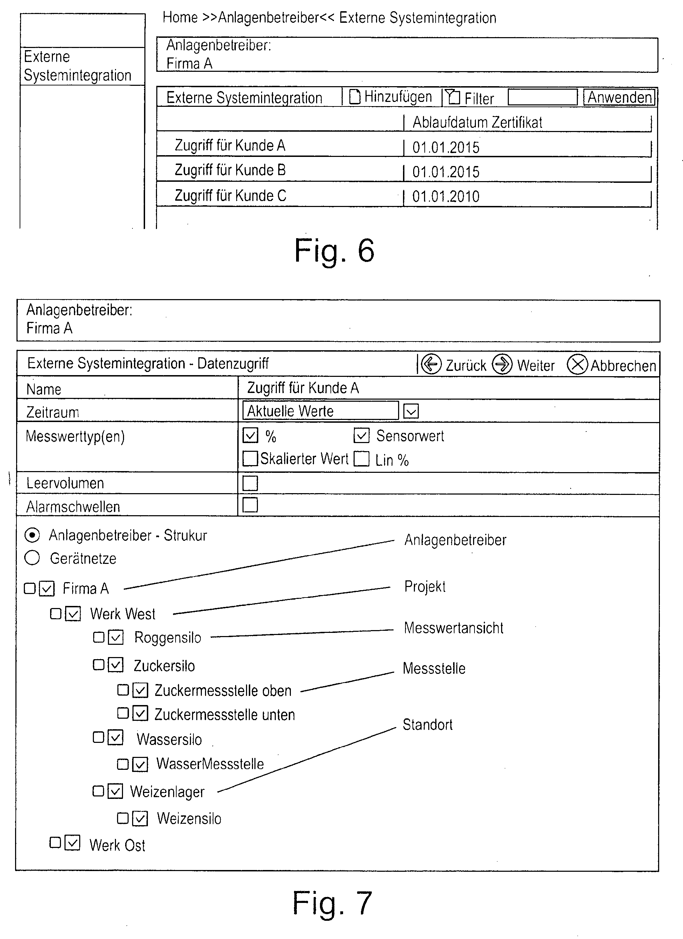

Auf dem zentralen Server wird neben der Benutzeroberfläche zum Verwalten von Benutzerkonten eine zweite Benutzeroberfläche zur Verwaltung von Datenfreigaben für Clientrechner angeboten (siehe Fig. 5 und Fig. 6).

Fig. 3 und Fig. 4 verdeutlichen die Verwaltung verschiedener Kunden (Anlagenbetreiber) und deren Projekte (Untergliederungen). Fig.3 zeigt eine Benutzeroberfläche zum Verwalten mehrerer Kunden (Anlagenbetreiber) auf dem Server. Sie verdeutlicht, dass auf dem Server Daten verwaltet werden, die von verschiedenen Kunden her stammen und verdeutlicht die Wichtigkeit der sauberen Zugriffssteuerung. Diese Benutzeroberfläche wird kein Kunde jemals aufrufen können, sie ist ausschließlich für den Administrator (also dem Betreiber des Servers) zugänglich.

Fig. 4 zeigt eine Benutzeroberfläche zur Verwaltung von verschiedenen Projekten, die sich ein Kunde zur besseren Übersichtlichkeit definiert hat. Die Verteilung der Vielzahl von Messstellen auf verschiedene Projekte gibt dem Kunden die Möglichkeit, zusammengehörende Messstellen in Unterstrukturen zu organisieren

Es kann dadurch also gezielt die Benutzeroberfläche für Benutzerkontenverwaltung (siehe Fig. 5) oder aber die Benutzeroberfläche für die Datenfreigabe für Clientrechner (siehe Fig. 6) geöffnet werden.

Die Benutzeroberfläche für die Datenfreigabe für Clientrechner bietet über grafische Hilfsmittel eine übersichtliche Möglichkeit zur Auswahl von gewünschten Messstellen (Feldgeräten) zur Datenfreigabe (siehe Fig. 7). Jedes definierte Daten-Set zur Freigabe für Clientrechner wird in einer Liste übersichtlich verwaltet. Neben der eigentlichen Definition der zugeordneten Messstellen wird gleichzeitig ein Zertifikat für das erstellte Datenobjekt generiert und diesem zugeordnet.

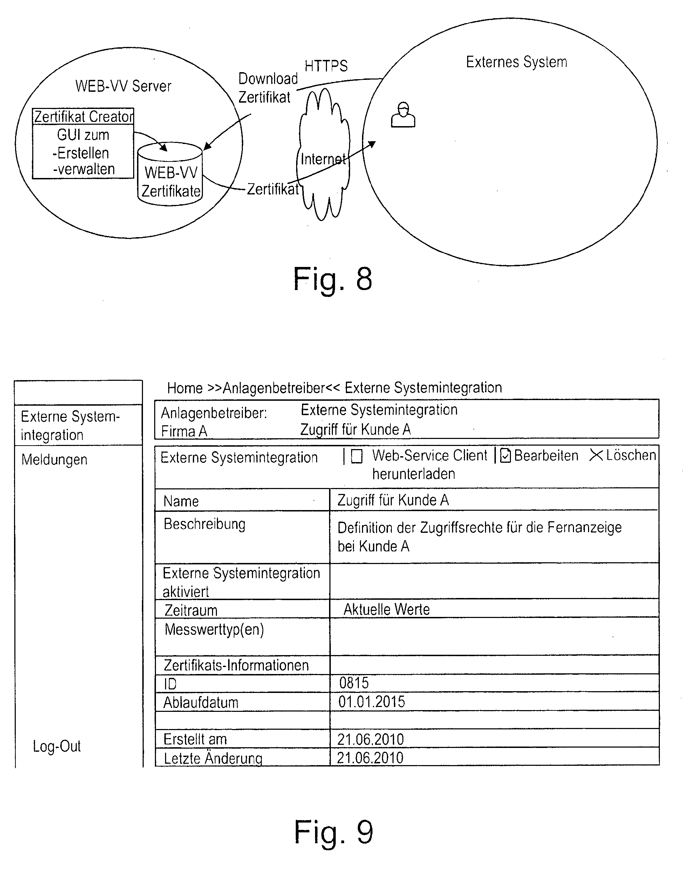

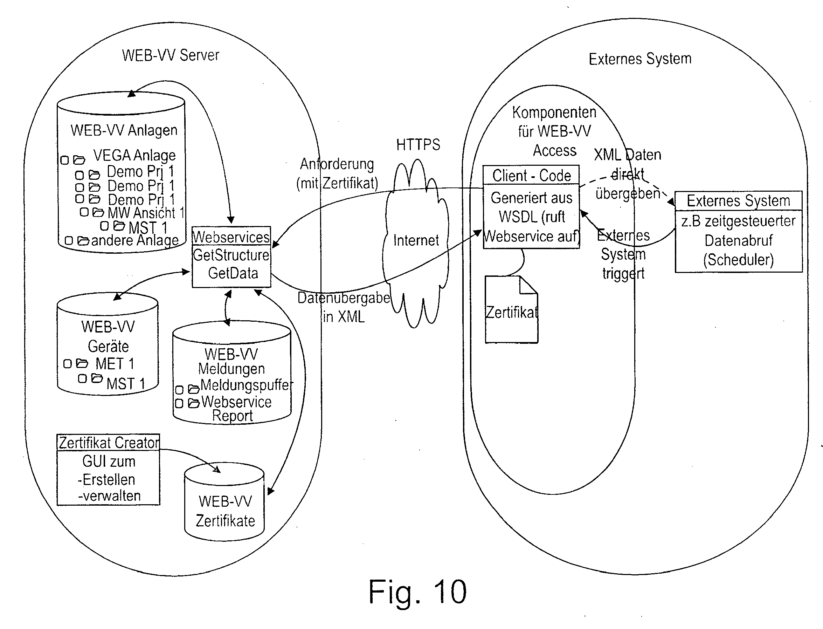

Das Zertifikat wird an den Betreiber des Clientrechners übermittelt bzw. der Betreiber lädt sich das Zertifikat selber herunter, wenn er als Benutzer von Web-VV eingetragen ist (siehe Figs. 8 und 9). Zusammen mit dem Zertifikat erhält der Betreiber den zum Webserver passenden Client-Code als WSDL-Datei oder als fertigen Demo-Client. Die WSDL-Datei bietet ihm die Möglichkeit, den Webservice plattformunabhängig in seine Zielumgebung zu integrieren (siehe Fig. 10).

Mit dem Demo-Client hat er die Möglichkeit der sofortigen Nutzung unter beispielsweise dem Betriebssystem MS Windows. Beispielsweise kann als Demo-Client eine Microsoft Windows 7-Minianwendung zur Anzeige genau einer Messstelle mit Alarmstatus verwendet werden. Dem jeweiligen Benutzer muss lediglich ein Zertifikat für seine gewünschte Messstelle ausgehändigt werden.

Nur die Inhaber eines Zertifikats können Zugriff auf die Daten auf dem Server erhalten, und zwar genau auf die Daten, die im zugeordneten Datenobjekt beschrieben sind. So muss bei den Clientrechnern keinerlei zusätzliche Anpassung bezüglich des Datenzugriffs vorgenommen werden. Allein das erhaltene Zertifikat bestimmt den maximalen Umfang der zur Übermittlung freigegebenen Daten. Natürlich kann der Benutzer in seiner Anfrage auch definieren, dass er auf eine Untermenge dieser maximal freigegebenen Datenmenge zugreifen möchte. In diesem Fall wird auch nur diese Untermenge an den Clientrechner 102 bzw. 108 übermittelt.

Die Definition der Zugriffsrechner erfolgt zentral an einer Stelle, beispielsweise auf dem Server, und wird auch hier verwaltet. Der Server benötigt für die Herausgabe der Daten nur eine einzige Schnittstelle, die anhand des Zertifikats des anfragenden Rechners die Datenzugriffe kanalisiert. Somit wird der Test- und Implementierungsaufwand auf dem Server niedrig gehalten und dennoch maximale Flexibilität sichergestellt.

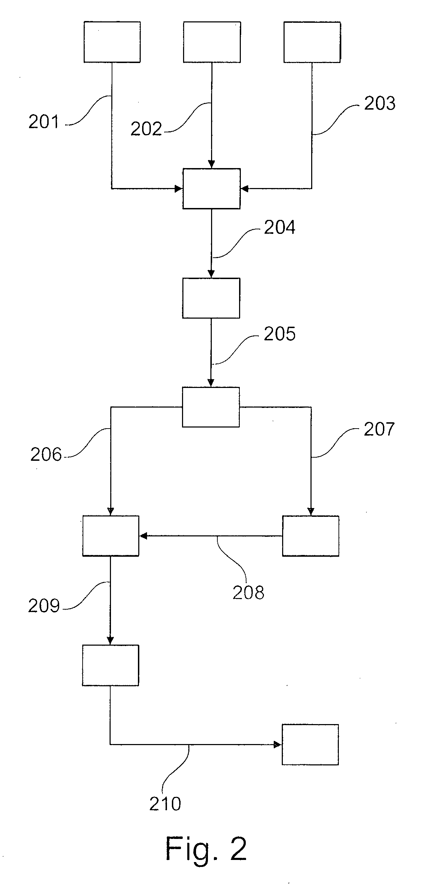

Fig. 2 zeigt ein Flussdiagramm eines Verfahrens gemäß einem Ausführungsbeispiel der Erfindung. In den Schritten 201, 202 und 203 werden von den einzelnen Feldgeräten Messdaten und/oder Diagnoseinformationsdaten an den zentralen Server übermittelt. In Schritt 204 erfolgt eine benutzerseitige Anfrage an den Server, ein Zertifikat zu erstellen. Diese Anfrage kann über das Internet erfolgen. Hierbei ist es wichtig, dass eine Authentifizierung des Benutzers stattfindet, dass also serverseitig festgestellt wird, ob dieser Benutzer die Berechtigung zum Erhalt eines Zertifikats hat.

In Schritt 205 werden dann das entsprechende Zertifikat und ein damit zusammenhängendes Datenobjekt erzeugt. Dieses Datenobjekt definiert alle Daten, die dem Benutzer auf eine entsprechende Anfrage bereitgestellt werden dürfen (wenn er mit dieser Anfrage auch das Zertifikat übermittelt).

In Schritt 206 wird das Datenobjekt im Server gespeichert und in Schritt 207 wird das Zertifikat dem Benutzer (also beispielsweise der über das Internet mit dem Server verbundenen Recheneinheit 102) übermittelt. In Schritt 208 erfolgt eine Anfrage des Benutzers an den Server, dem Benutzer bestimmte Messdaten bereitzustellen. Zusammen mit dieser Anfrage wird das Zertifikat an den Server übermittelt. In Schritt 209 erfolgt eine Authentifizierung des Benutzers durch Überprüfung des Zertifikats und eine Identifikation der mit den dem Zertifikat zugeordneten Datenobjekt zugehörigen Daten auf dem Server. Weiterhin identifiziert der Server die vom Benutzer angeforderten Daten und überprüft, ob diese auch von dem Datenobjekt umfasst werden, ob sie also dem Benutzer zur Verfügung gestellt werden dürfen. Sind sowohl die Authentifizierung als auch diese Datenkontrolle erfolgreich verlaufen, werden die angefragten Daten in Schritt 210 an den Benutzer übermittelt.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Intemetbasiertes Füllstandmesswert- und Diagnoseinformationsabfragesystem, das System aufweisend:
einen Server (101);
ein erstes Feldgerät (103), das zur Übermittlung von ersten Messwerten an den Server (101) kommunikativ mit dem Server (101) verbunden ist;
eine Recheneinheit (102, 108), die zur Abfrage der ersten Messwerte von dem Server (101) über das Internet kommunikativ mit dem Server (101) verbunden ist;
wobei der Server zur Erzeugung eines ersten Zertifikats und eines, dem ersten Zertifikat zugeordneten, ersten Datenobjekts auf eine Anfrage der Recheneinheit (102, 108) ausgeführt ist;
wobei das erste Datenobjekt es dem Server ermöglicht, die ersten Messwerte des ersten Feldgeräts (103) als dem ersten Zertifikat zugeordnet zu identifizieren;
wobei der Server (101) zur automatischen Übermittlung der dem ersten Zertifikat zugeordneten ersten Messwerte an die Recheneinheit (102, 108) ausgeführt ist, wenn er das erste Zertifikat von der Recheneinheit (102) erhält;
wobei alleine das von der Recheneinheit (102) im Server (101) eingegangene Zertifikat und somit das dem ersten Zertifikat zugeordnete erste Datenobjekt den Umfang der daraufhin von dem Server (101) an die Recheneinheit (102) zu übermittelnden Daten bestimmt.

2. System nach Anspruch 1,
wobei das System ein zweites Feldgerät (104, 105, 106, 107) aufweist, das zur Übermittlung von zweiten Messwerten an den Server (101) kommunikativ mit dem Server (101) verbunden ist;
wobei das System zur Erzeugung eines zweiten Zertifikats und eines, dem zweiten Zertifikat zugeordneten, zweiten Datenobjekts auf Anfrage der Recheneinheit (102) ausgeführt ist;
wobei das zweite Datenobjekt es dem Server ermöglicht, die zweiten Messwerte des zweiten Feldgeräts (104, 105, 106, 107) als dem zweiten Zertifikat zugeordnet zu identifizieren;
wobei der Server (101) zur automatischen Übermittlung der dem zweiten Zertifikat zugeordneten zweiten Messwerten an die Recheneinheit (102) ausgeführt ist, wenn er eine entsprechende Anfrage und das zweite Zertifikat von der Recheneinheit (102) erhält.

3. System nach einem der vorhergehenden Ansprüche,
wobei der Server (101) zur Verwaltung des ersten Zertifikats ausgeführt ist.

4. System nach einem der vorhergehenden Ansprüche,
wobei der Server (101) weiterhin zur Verwaltung individueller Benutzerkonten ausgeführt ist, über welche die Recheneinheit (102) eine Parametrierung des ersten Feldgeräts (103) vornehmen kann.

5. System nach Anspruch 4,
wobei der Server (101) für die Verwaltung der individuellen Benutzerkonten zur Bereitstellung einer ersten Benutzeroberfläche für einen Benutzer der Recheneinheit (102) ausgeführt ist; und
wobei der Server (101) für die Verwaltung der Zertifikate zur Bereitstellung einer zweiten Benutzeroberfläche für einen Benutzer der Recheneinheit (102) ausgeführt ist.

6. System nach einem der vorhergehenden Ansprüche,
wobei das erste Datenobjekt es dem Server weiterhin ermöglicht, Diagnosedaten des ersten Feldgeräts (103) als dem ersten Zertifikat zugeordnet zu identifizieren.

7. System nach einem der vorhergehenden Ansprüche,
wobei es sich bei dem ersten Feldgerät (103) um ein Füllstandmessgerät handelt; und
wobei diese Daten Füllstandmessdaten und Diagnosedaten sind.

8. Verfahren zum Verwenden eines internetbasierten Füllstandmesswert- und Diagnoseinformationsabfragesystems, das Verfahren aufweisend die Schritte:
Übermittlung von ersten Messwerten von einem ersten Feldgerät (103) an einen Server (101);
Erzeugung eines ersten Zertifikats und eines, dem ersten Zertifikat zugeordneten, ersten Datenobjekts durch den Server auf eine Anfrage der Recheneinheit (102, 108);
mit Hilfe des ersten Datenobjekts Identifizieren der ersten Messwerte des ersten Feldgeräts (103) als dem ersten Zertifikat zugeordnet;
automatisches Übermitteln der dem ersten Zertifikat zugeordneten ersten Messwerte von dem Server (101) an die Recheneinheit (102, 108), wenn der Server (101) das ersten Zertifikat von der Recheneinheit (102, 108) erhält;
wobei alleine das von der Recheneinheit (102) im Server (101) eingegangene Zertifikat und somit das dem ersten Zertifikat zugeordnete erste Datenobjekt den Umfang der daraufhin von dem Server (101) an die Recheneinheit (102) zu übermittelnden Daten bestimmt.

9. Verfahren nach Anspruch 8, weiterhin aufweisend die Schritte:
Übermitteln des Zertifikats von der Recheneinheit (102) an den Server (101);
Authentifizieren der Recheneinheit (102) auf Basis des Zertifikats;
Bestimmen eines Umfangs der daraufhin von dem Server (101) an die Recheneinheit (102) zu übermittelnden Daten alleine mit Hilfe des dem Server übermittelten ersten Zertifikats und somit des dem ersten Zertifikat zugeordneten ersten Datenobjekts.

10. Verfahren nach Anspruch 8 oder 9, weiterhin aufweisend die Schritte:
Bereitstellung einer ersten Benutzeroberfläche für einen Benutzer der Recheneinheit (102) durch den Server (101) zur Verwaltung der individuellen Benutzerkonten; und
Bereitstellung einer zweiten Benutzeroberfläche für einen Benutzer der Recheneinheit (102) durch den Server zur Verwaltung der Zertifikate.

## Claims

1. Internet-based fill-level measured value and diagnostic information retrieval system comprising:
a server (101);
a first field device (103) which is communicatively connected to the server (101) in order to transmit first measured values to the server (101);
a processing unit (102, 108) which is communicatively connected to the server (101) via the Internet in order to retrieve the first measured values from the server (101);
wherein the server is configured to generate a first certificate and a first data object which is assigned to the first certificate upon receipt of a request from the processing unit (102, 108);
wherein the first data object allows the server to identify the first measured values of the first field device (103) as being assigned to the first certificate;
wherein the server (101) is configured to automatically transmit, to the processing unit (102, 108), the first measured values assigned to the first certificate when the server receives the first certificate from the processing unit (102);
wherein only the certificate received in the server (101) from the processing unit (102), and thus the first data object which is assigned to the first certificate, determines the extent of the data which is subsequently to be transmitted from the server (101) to the processing unit (102).

2. System according to claim 1,
wherein the system comprises a second field device (104, 105, 106, 107) which is communicatively connected to the server (101) in order to transmit second measured values to the server (101);
wherein the system is configured to generate a second certificate and a second data object which is assigned to the second certificate upon receipt of a request from the processing unit (102);
wherein the second data object allows the server to identify the second measured values of the second field device (104, 105, 106, 107) as being assigned to the second certificate;
wherein the server (101) is configured to automatically transmit, to the processing unit (102), the second measured values assigned to the second certificate when it receives a corresponding request and the second certificate from the processing unit (102).

3. System according to any of the preceding claims,
wherein the server (101) is configured to manage the first certificate.

4. System according to any of the preceding claims,
wherein the server (101) is further configured to manage individual user accounts by means of which the processing unit (102) can carry out parameterisation of the first field device (103).

5. System according to claim 4,
wherein the server (101) is configured to provide a first user interface for a user of the processing unit (102) for the management of the individual user accounts; and
wherein the server (101) is configured to provide a second user interface for a user of the processing unit (102) for the management of the certificates.

6. System according to any of the preceding claims,
wherein the first data object further allows the server to identify diagnostic data of the first field device (103) as being assigned to the first certificate.

7. System according to any of the preceding claims,
wherein the first field device (103) is a fill-level measuring device; and wherein these data are fill-level measurement data and diagnostic data.

8. Method for using an internet-based fill-level measured value and diagnostic information retrieval system, the method comprising the steps of:
transmitting first measured values from a first field device (103) to a server (101);
generating a first certificate and a first data object assigned to the first certificate via the server upon receipt of a request from the processing unit (102, 108);
identifying, by means of the first data object, the first measured values of the first field device (103) as being assigned to the first certificate;
automatically transmitting the first measured values assigned to the first certificate from the server (101) to the processing unit (102, 108) when the server (101) receives the first certificate from the processing unit (102, 108);
wherein only the certificate received in the server (101) from the processing unit (102) and thus the first data object which is assigned to the first certificate determines the extent of the data which is subsequently to be transmitted from the server (101) to the processing unit (102).

9. Method according to claim 8, further comprising the steps of:
transmitting the certificate from the processing unit (102) to the server (101);
authenticating the processing unit (102) on the basis of the certificate;
determining, solely by means of the first certificate transmitted to the server, and thus of the first data object assigned to the first certificate, an extent of the data that is subsequently to be transmitted from the server (101) to the processing unit (102).

10. Method according to either claim 8 or claim 9, further comprising the steps of:
providing a first user interface for a user of the processing unit (102) via the server (101) for managing the individual user accounts; and
providing a second user interface for a user of the processing unit (102) via the server for managing the certificates.

## Revendications

1. Système de demande d'informations de diagnostic et de valeurs de mesure de niveau basé sur l'Internet, le système comportant :
un serveur (101),
un premier appareil de terrain (103) qui est relié au serveur (101) de manière communicante pour transmettre des premières valeurs de mesure au serveur (101),
une unité de calcul (102, 108) qui est reliée au serveur (101) de manière communicante via l'Internet pour demander les premières valeurs de mesure à partir du serveur (101),
dans lequel le serveur est exécuté pour générer un premier certificat et un premier objet de données associé au premier certificat sur une requête de l'unité de calcul (102, 108),
dans lequel le premier objet de données permet au serveur d'identifier des premières valeurs de mesure du premier appareil de terrain (103) comme étant associées au premier certificat,
dans lequel le serveur (101) est exécuté pour transmettre automatiquement à l'unité de calcul (102, 108) les premières valeurs de mesure associées au premier certificat lorsqu'il reçoit le premier certificat provenant de l'unité de calcul (102),
dans lequel seul le certificat reçu de l'unité de calcul (102) par le serveur (101) et, de ce fait, le premier objet de données associé au premier certificat, détermine l'étendue des données à transmettre du serveur (101) à l'unité de calcul (102).

2. Système selon la revendication 1,
dans lequel le système comporte un second appareil de terrain (104, 105 106, 107) qui est relié au serveur (101) de manière communicante pour transmettre des secondes valeurs de mesure au serveur (101),
dans lequel le système est exécuté pour générer un second certificat et un second objet de données associé au second certificat sur une requête de l'unité de calcul (102),
dans lequel le second objet de données permet au serveur d'identifier des secondes valeurs de mesure du second appareil de terrain (104, 105, 106, 107) comme étant associées au second certificat,
dans lequel le serveur (101) est exécuté pour transmettre automatiquement à l'unité de calcul (102) les secondes valeurs de mesure associées au second certificat lorsqu'il reçoit une requête correspondante et le second certificat provenant de l'unité de calcul (102).

3. Système selon l'une quelconque des revendications précédentes,
dans lequel le serveur (101) est exécuté pour gérer le premier certificat.

4. Système selon l'une quelconque des revendications précédentes,
dans lequel le serveur (101) est de plus exécuté pour gérer des comptes d'utilisateurs individuels par l'intermédiaire desquels l'unité de calcul (102) peut effectuer un paramétrage du premier appareil de terrain (103).

5. Système selon la revendication 4,
dans lequel le serveur (101) est exécuté pour gérer les comptes d'utilisateurs individuels afin de fournir une première interface utilisateur à un utilisateur de l'unité de calcul (102), et
dans lequel le serveur (101) est exécuté pour gérer les certificats afin de fournir une seconde interface utilisateur à un utilisateur de l'unité de calcul (102).

6. Système selon l'une quelconque des revendications précédentes,
dans lequel le premier objet de données permet en outre au serveur d'identifier des données de diagnostic du premier appareil de terrain (103) comme étant associées au premier certificat.

7. Système selon l'une quelconque des revendications précédentes,
dans lequel le premier appareil de terrain (103) est un appareil de mesure de niveau, et
dans lequel ces données sont des données de mesure de niveau et des données de diagnostic.

8. Procédé pour utiliser un système de demande d'informations de diagnostic et de valeurs de mesure de niveau basé sur l'Internet, le procédé comportant les étapes consistant à :
transmettre à un serveur (101) des premières valeurs de mesure provenant d'un premier appareil de terrain (103),
générer, par l'intermédiaire du serveur, un premier certificat et un premier objet de données associé au premier certificat sur une requête de l'unité de calcul (102, 108),
à l'aide du premier objet de données, identifier les premières valeurs de mesure du premier appareil de terrain (103) comme étant associées au premier certificat,
transmettre automatiquement du serveur (101) à l'unité de calcul (102, 108) les premières valeurs de mesure associées au premier certificat lorsque le serveur (101) reçoit le premier certificat provenant de l'unité de calcul (102, 108),
dans lequel seul le certificat reçu de l'unité de calcul (102) par le serveur (101) et, de ce fait, le premier objet de données associé au premier certificat, détermine l'étendue des données à transmettre du serveur (101) à l'unité de calcul (102).

9. Procédé selon la revendication 8, comportant en outre les étapes consistant à :
transmettre le certificat de l'unité de calcul (102) au serveur (101),
authentifier l'unité de calcul (102) sur la base du certificat,
déterminer une étendue des données à transmettre du serveur (101) à l'unité de calcul (102) uniquement à l'aide du premier certificat transmis au serveur et donc du premier objet de données associé au premier certificat.

10. Procédé selon la revendication 8 ou 9, comportant en outre les étapes consistant à:
par l'intermédiaire du serveur (101), fournir une première interface utilisateur à un utilisateur de l'unité de calcul (102) pour gérer les comptes d'utilisateurs individuels, et
par l'intermédiaire du serveur, fournir une seconde interface utilisateur à un utilisateur de l'unité de calcul (102) pour la gestion des certificats.
